# EUROPEAN PATENT SPECIFICATION

(11) **EP 1 484 710 B1**
(45) Date of publication and mention of the grant of the patent: **09.01.2008**
(21) Application number: 04020890.2
(22) Date of filing: 13.11.1999
(51) Int. Cl.: G06K 19/06, B42D 15/10, B41M 3/14, G07F 7/08, H04N 1/32, G06T 1/00, G07D 7/00, G06K 1/00

(54) **Photographic identification document**
Ausweisdokument mit Photo
document d'identité avec photo

(30) Priority: 19.11.1998 US 109259 P
(43) Date of publication of application: 08.12.2004
(62) Divisional of application: 99958983.1
(73) Proprietor: Digimarc Corporation, Beaverton, OR 97008 (US)
(72) Inventor: Carr, Jonathan Scott, Tualatin, Oregon 97062 (US); Perry, Burt W., Lake Oswego, OR 97035 (US); Rhoads, Geoffrey B., West Linn, OR 97068 (US)
(74) Representative: Hoarton, Lloyd Douglas Charles

(56) References cited:
- WO-A-96/03286
- WO-A-96/36163
- WO-A-99/36876
- WO-A-99/53428
- US-A- 5 284 364
- US-A- 5 787 186
- US-A- 5 799 092

## Description

### Field of the Invention:

The present invention relates to the security documents such as passports, driver's licenses, credit cards, etc. and to systems for producing and validating such documents.

### Background of the Invention:

Many security documents contain a picture of the owner of the document. For example, a driver's license generally includes a picture of the driver and a passport generally includes a picture of the owner of the passport. Validation of such documents is performed by comparing the actual physical appearance of the person possessing the document to the picture on the document. A common counterfeiting techniques involves replacing the picture on a security document with a picture of someone who is not the owner of the document.

US Patent number 5,841,886 corresponding to publication WO 96/36163 describes a technique whereby a digital watermark is included in the picture on a security document.

The security document contains human readable text that is related to the data contained in the watermark. The document can be inserted into a scanner which will read the watermark and the operator can compare the output of the watermark reader to the text to insure that the person possessing the document is the legitimate owner.

WO96/36163 discloses various steganography systems. One embodiment contemplates a photo ID document in which a photograph on the document is sleganographically encoded wich digital watermark data by which tampering, such as photo-swapping, can be detected. Claim 1 is delimited against this document.

US-A-5284364 discloses a document security system incorporation tamper-resistant and tamper-evident features.

US-A-5787986 discloses a biometric security procedure for manufacturing an identity document.

US-A-5799092 discloses a self-verifying identification card.

WO96/03286 discloses systems and articles of manufacture for creating and authenticating self-verifying articles.

WO99/36876 discloses watermarking techniques to be embedded in a document using multiple digital watermarks which will be affected in a different manner if a document is subsequently copied and reproduced

WO99/53428 discloses techniques for digitally watermarking bank notes. Two digital watermarks are steganographically encoded in a bank note or other security document.

Custom printing systems are available which accept data from multiple sources and produce documents which are tailored to individual customer characteristics or to information concerning an individual customer. Such systems can for example produce personalized documents that include both fixed information on each document that is printed and variable information such as personal information about an individual's account at an institution such as a bank. One such system is commercially marketed under the trademark "PageFlex" by Bitstream Inc. of Cambridge Mass.

Likewise the technology for producing images which contain steganographic information in the form of digital watermarks is well developed. For example see U.S. patent 5,636,292, U.S. patent 5,748,783 or the "Communications of the ACM" published July 1998 Vol. 41. No. 7 pages 31 to 77, EPO publication number XP 779 699 Commercial. products which can store and read digital watermarks are also widely available. Examples of such products include "Adobe PhotoShop" Versions 4.0 and 5.0 and "Adobe ImageReady" Version 1.0 which are marketed by Adobe Corporation, "CorelDRAW" Versions 7 and 8, and "Corel PHOTO-PAINT" Versions 7 and 8 which are marketed by Corel Corporation, and Micrografx Webtricity" Versions 1 and 2, "Micrografx Graphics Suite 2", and "Micrografx Picture Publisher" Versions 7 and 8 which are marketed by Micrografx Corporation (trade marks).

Security documents such as passports and drivers licenses have traditionally contained both images and printed text. However, the images and the text in such documents are generally prepared in separate processes and merely merged at a final step in the overall production.

The present invention is directed to an improved security document which has several correlated multi-level self validating features.

The document contains a number of different kinds of information that is hidden from normal view and which can be correlated to validate the document. The validation can be done entirely automatically decreasing the need for human intervention.

With the prior art systems, a human being such as an immigration officer must examine a passport to determine if the person presenting the document is the rightful owner of the document. With embodiments of the present invention, the authentication can be done entirely automatically, leaving the human operator free to handle non-routine situations.

### Summary of the Invention:

The present invention provides a security document in accordance with claim 1 which has multiple fields or areas each of which contains information that is perceptible in more than one way. For example, one field can contain a visually perceptible image and a digital watermark that can be detected when the image is scanned and processed, another field can contain machine readable OCR text that can be read by both a human and by a programmed computer, and still another field can contain watermark data which can be correlated to the output of a fingerprint reader or apparatus which scans a user's irts.

Documents in accordance with embodiments of the present invention are produced by a system and method which begins with a template which defines the placements of elements on the document and the interrelationships between hidden and visual information on the document. That is, the template specifies the placement of elements such as images, photographs, and text and it also specifies the interrelationship between information that is visually perceptible to a user of the document and information that is hidden (not perceptible to a user) by means of digital watermarks. Different hidden digital watermark data is included in multiple elements of the document. The watermarks in the different graphic elements of the document are correlated to each other and correlated to the visual material on the document. In this way the document can not be forged by replacing one element (such as a picture) with a similar element from another document In order to produce a document defined by a particular template, appropriate pictures, graphics and digital data are extracted from a data bank, and watermark data is embedded in the pictures and graphics as appropriate. The merged digital data is then sent to a printing engine and the final document is produced.

An automatic validation system reads multiple fields on the document, and it also automatically detects information about the user. The various information is correlated to validate the document.

### Brief Description of the Drawings:

Figure 1 Illustrates a security document in accordance with an embodiment of the present invention.
Figure 2 is an overall diagram of a system to produce security documents.
Figure 3 is a diagram of a document validation system.

### Description of a preferred embodiment:

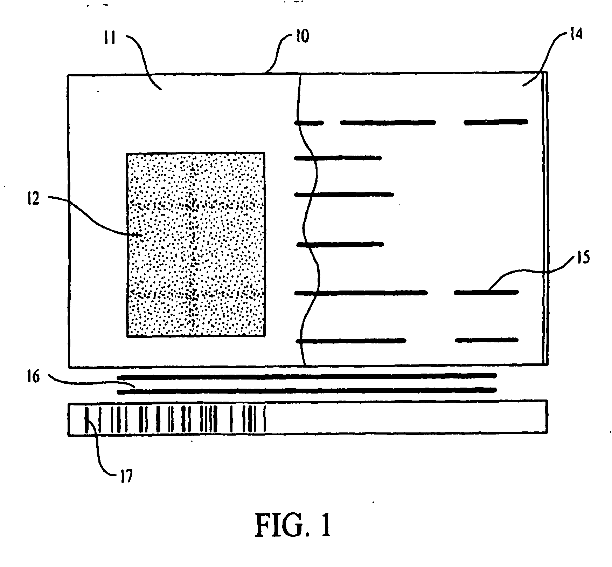

A diagram of a security document in accordance with an embodiment of the present invention is shown in Figure 1. The security features on the document are a pre-printed background 11 which has an image or pattern (not visible in Figure 1) which contains a digital watermark. The image in background 11 may contains lines the width of which are varied to carry a watermark in accordance with the technique described in co-pending application 09/074,034 filed May 6, 1998 (see also WO 99/53428) or which has a weave or tint patem in accordance with the teachings of co-pending application 09/127,502, filled July 31,998 (see also PCT/US99/14532).

Corresponding publication numbers are WO 00/07356, WO 00/07356, US 6,345,104, WO 99/53428, GB 2,353,168 and EP 0 961 239.

The document also contains a photograph 12 which shows the owner of the document. This photograph 12 contains a watermark such as that described in US. Patent number 5,841,888. The personalized background 14 can for example be a background image which corresponds to the image 12. While the personalized image 14 corresponds to the photograph 12, in area 14 the image is printed as a background image. Background images of various types are conventional, for example personal checks frequently have background images of animals, mountains, etc.. The background image makes it hard to change the human readable text 15 which is printed over the background image. The bottom of the document has machine readable OCR-8 text 18 and a Bar code 17.

It should be clearly understood that the document shown in Figure 1 is merely illustrative of the various elements that can be combined to form a security document. The exact layout can vary depending upon the needs of the particular application. If desired for a particular application, the document can be much more complex than the document shown in Figure 1. The document can have many more fields and elements than does the document shown in Figure 1. Furthermore the document could contain the various other known technology for preventing counterfeiting such as special paper and special ink.

The document shown in Figure 1 can for example be a document such as a driver's license in which case the picture 12 would be a picture of the owner of the license. Graphic image 11 could for example be a state seal. The text 15 could for example include the driver's license number, the owner's age, and the owner's address

Document 10 can be a passport. In a passport, the hidden digital watermark data in picture 12 and in the other fields could be coordinated as follows:

| | Watermark contains | Correlates to |
|---|---|---|
| Pre-printed background 11 | unique document "batch" number | |
| Photo 12: | Batch number and passport number (cryptographically encoded) | OCR-B version of passport number, Human readable passport number, Master document |
| Personalized background 14 | "hash" of fingerprint | fingerprint of the holder which is automatically read |
| Bar code 17 | Passport number (in code not in watermark) | Watermark in photo 12 |
| OCR-B text 16 Passport number Batch number ( in text not in watermark) | | Info in photo 12, background 11 and Bar code 17 |

An important point is that the various elements of hidden and visual information are coordinated in such a manner that the document is self authenticating. The hidden data in one field can be correlated with the hidden data in another field to insure that the document has not been altered.

If for example one tried to alter a document by replacing picture 12 with a different picture, the new picture would either contain no hidden data, or if it were a picture taken from a different document, the numbers stored in the picture would not match the printed information in text field 15.

If the picture from one document were substituted for the picture in a second document, the cryptographically encoded serial numbers could be used to determine the origin of the picture. It is noted that while in the example shown above, both the Batch number and passport number are cryptographically encoded, other numbers such as a serial number or an ID number could also be encoded in a special manner.

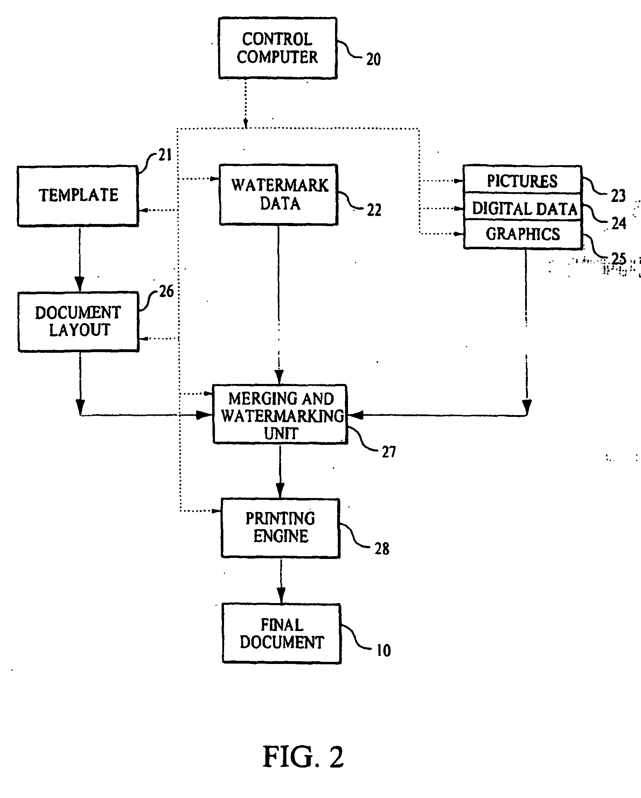

Figure 2 shows an overall diagram of a system for producing document 10. The system includes a number of units, the operation of which is controlled and coordinated by a control computer 20. The following explanation will illustrate how the system shown in Figure 2 can be used to produce a document such as the document shown in Figure 1.

A template 21 is used to define the overall characteristics of a document. The characteristics is specified by template 21, including the fields on the document, the data printed in any text fields and the watermarks included in each image included on the document.

The template 21 is used by document layout device 26 to layout a particular document for production. Data which is to be included in the watermarks in any image field are stored in Watermark data store 22. Any pictures, text data, and graphics are stored in units 23, 24 and 25 respectively.

The document layout from unit 26, the digital watermark data from unit 22 and the pictures, text data and graphics from units 23, 24, and 25 are sent to Merging and watermarking unit 27. Unit 27 applies watermarks to pictures and graphics as specified by the layout information from unit 11. Application of the watermarks to the pictures and graphics can be done in a conventional manner; however, prior to sending the watermark payload (i.e. the data stored in the watermark) to the watermarking engine, the data can be passed through a conventional encryption program. Encrypting the payload data provides an added assurance that a counterfeiter could not make a counterfeit document. The level of encryption could be any level appropriate to the value of the document.

The output from the Merging and watermarking unit 27 is then sent to a conventional printing engine 28 which produces a final document 10.

Watermark Data storage 22, picture storage 23, digital data storage 24 and graphics storage 25 can be conventional data storage servers. Physically they could all be provided by one physical storage unit Template input unit 21 is a conventional interactive terminal or personal computer with a graphic design program. Merging and watermarking unit 27 can be a conventional watermarking engine.

The system shown in Figure 2 produces various parts of the security document in a single step, thereby making it much harder to replace one element on a security document with a similar element from another document.

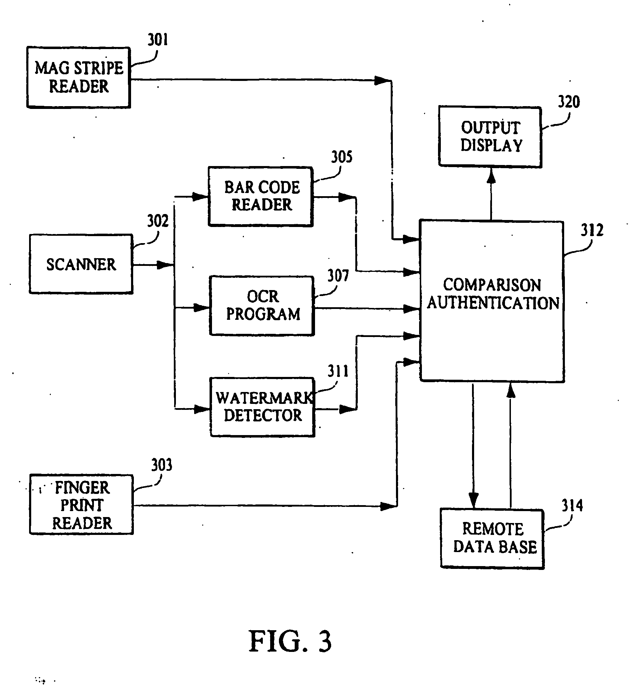

Figure 3 is a diagram of a document self authentication unit. The system has three input units, each of which is conventional and commercially available. The input units are a magnetic stripe reader 301, a high resolution image scanner 302, and a fingerprint reader 303. The document 10, shown in Figure 1 does not include a magnetic stripe, but one of the alternatives for such a document is to include a magnetic stripe.

The output from scanner 305 goes to three units (that is, to three computer programs) 305, 307 and 311. Alternatively, the bar code reader 305 could be a separate unit which directly reads the bar code and provides information to comparison and authentication unit 312.

The bar code reader 305 is a computer program which receives information from the output of scanner 302. The program 305 will read the bar code 17. OCR program 307 reads the text 15 and the text 16 and watermark detector 311 reads the watermarks in images 11, 12 and 14.

An authentication and comparison unit 312 compares the data from units 305, 307, 311 and 303 to determine if the data matches. If the data in some of the watermarks is encrypted, the comparison and authentication unit 312 would include an appropriate decryption program. The decryption program in unit 312 could obtain the decryption key from remote data base 314 in response to the number read by one of the devices. Alternatively, the encrypted data could be automatically sent to a central facility for decryption. The unit 312 can also access a remote data base 314 to determine if there is any special handling that is required for the document that has been presented. For example data base 314 could contain information about passports that have been cancelled for various reasons. The resulting information is displayed on a display unit 320.

## Claims

1. A photographic identification document (10) comprising a photograph (12) and a printed region (11),
a first digital watermark being steganographically encoded in the photograph (12),
the first digital watermarks conveying first information that can later be decoded and used to authenticate the document (10),
**characterized in that** the document comprises a second digital watermark steganographically encoded in the printed region (11) of the document (10),
the second digital watermark conveying second information whose contents have an expected correspondence with contents of said first information,
said first and second information can be decoded and checked for said expected correspondence to aid in confirming that the photographic identification document (10) is authentic.

2. The identification document (10) of claim 1 in which the information conveyed by the first digital watermark includes a document number, and the same document number is also conveyed by the second digital watermark.

3. The identification document (10) of claim 1 or 2 in which the information conveyed by the first digital watermark includes some data that is not conveyed by the second digital watermark.

4. The identification document (10) of any one of claims 1 to 3 in which the document (10) is provided with a machine-readable feature (16) distinct from said digital watermarks, said machine-readable feature (16) conveying data relating to a document identifier, wherein information conveyed by one of said watermarks includes data that corresponds in a predetermined manner with said identifier, permitting data from said machine-readable feature and said watermark to be checked for expected correspondence to aid in detecting fraudulent alteration of the document (10).

5. The identification document (10) of claim 4 in which the first watermark conveys said identifier, and the second watermark conveys data produced by processing said identifier in accordance with an algorithm.

6. The identification document (10) of claim 5 in which the second watermark conveys data produced by processing said identifier in accordance with a cryptographic algorithm.

7. The identification document (10) of any one of the preceding claims in which the article also conveys biometric hash data corresponding to a person depicted in the photographic image.

8. The identification document (10) of claim 7 in which the biometric hash data is conveyed by a steganographic digital watermark distinct from said first and second digital watermarks.

9. The identification document (10) of any one of the preceding claims in which the document is provided with first and second different machine-readable features distinct from the first and second watermarks, the first and second machine-readable features being selected from the group consisting of a bar-code (17), OCR-B text (16), and a magnetic stripe, wherein one of said features conveys data that corresponds in a predetermined manner with data carried by the first watermark, and the other of said features conveys data that corresponds in a predetermined manner with data carried by the second watermark.

10. The identification document (10) of claim 9 in which the first feature conveys data that corresponds in a predetermined manner with data carried by the first watermark, and the second feature conveys data that corresponds in a predetermined manner with data carried by the second watermark.

11. The identification document (10) of claim 10 in which the first feature comprises OCR-B text.

12. The identification document (10) of claim 9 or 10 in which the second feature comprises a bar-code.

13. The identification document (10) of any one of the preceding claims in which the document includes at least four machine-readable features:
the first watermark;
the second watermark;
a third feature (16); and
a fourth feature (7);
and wherein data relating to a first parameter logically links a group of three of said features, and data related to a second parameter logically links a different group of three of said features.

14. The identification document (10) of claim 13 in which the third feature comprises OCR-B text.

15. The identification document (10) of claim 13 or 14 in which the fourth feature comprises a bar code.

16. The identification document (10) of any one of claims 13-15 in which:
data relating to a first parameter logically links the two watermarks and one of the third or fourth features; and
data related to the second parameter logically links the third feature, the fourth feature, and one of the two watermarks.

17. The identification document (10) of claim 16 in which the first parameter is a document identifier.

18. The identification document (10) of claim 17 in which data related to the document identifier logically links the third feature, the fourth feature, and one of the watermarks.

19. The identification document (10) of claim 16 in which the second parameter is a batch number.

20. The identification document (10) of claim 19 in which data related to the batch number logically links the two watermarks and the third feature.

21. The identification document (10) of any one of the preceding claims wherein the document is a passport.

22. The identification document (10) according to any one of claims 1 to 20 wherein the document is a driver's license.

## Patentansprüche

1. Ausweisdokument mit Foto (10), das Folgendes umfasst: ein Foto (12) und einen bedruckten Bereich (11),
ein erstes digitales Wasserzeichen, das steganografisch in dem Foto (12) codiert ist,
wobei das erste digitale Wasserzeichen erste Informationen trägt, die später decodiert und zur Authentisierung des Dokuments (10) verwendet werden können,
**dadurch gekennzeichnet, dass** das Dokument ein zweites digitales Wasserzeichen umfasst, das steganografisch in dem bedruckten Bereich (11) des Dokuments (10) codiert ist,
wobei das zweite digitale Wasserzeichen zweite Informationen trägt, von deren Inhalt erwartet wird, dass er mit dem Inhalt der ersten Informationen übereinstimmt,
wobei die ersten und zweiten Informationen decodiert und bezüglich der erwarteten Übereinstimmung überprüft werden können, um die Bestätigung zu unterstützen, dass das Ausweisdokument mit Foto (10) echt ist.

2. Ausweisdokument (10) nach Anspruch 1, wobei die Informationen, die das erste digitale Wasserzeichen trägt, eine Dokumentnummer umfassen und das zweite digitale Wasserzeichen ebenfalls dieselbe Dokumentnummer trägt.

3. Ausweisdokument (10) nach Anspruch 1 oder 2, wobei die Informationen, die das erste digitale Wasserzeichen trägt, bestimmte Daten umfassen, die das zweite digitale Wasserzeichen nicht trägt.

4. Ausweisdokument (10) nach einem der Ansprüche 1 bis 3, wobei das Dokument (10) mit einem maschinenlesbaren Merkmal (16) versehen ist, das sich von den digitalen Wasserzeichen unterscheidet, und das maschinenlesbare Merkmal (16) Daten trägt, die ein Dokumentkennzeichen betreffen, wobei die Informationen, die eines der Wasserzeichen trägt, Daten umfassen, die dem Kennzeichen in einer vorherbestimmten Weise entsprechen, wodurch ermöglicht wird, dass Daten von dem maschinenlesbaren Merkmal und dem Wasserzeichen auf eine erwartete Übereinstimmung hin überprüft werden können, um die Erfassung einer betrügerischen Änderung des Dokuments (10) zu unterstützen.

5. Ausweisdokument (10) nach Anspruch 4, wobei das erste Wasserzeichen das Kennzeichen trägt und das zweite Wasserzeichen Daten trägt, die durch Verarbeitung des Kennzeichens gemäß eines Algorithmus erzeugt werden.

6. Ausweisdokument (10) nach Anspruch 5, wobei das zweite Wasserzeichen Daten trägt, die durch Verarbeitung des Kennzeichens gemäß eines Verschlüsselungsalgorithmus erzeugt werden.

7. Ausweisdokument (10) nach einem der vorhergehenden Ansprüche, wobei der Artikel ebenfalls biometrische Hash-Daten trägt, die einer Person entsprechen, die auf dem fotografischen Bild dargestellt ist.

8. Ausweisdokument (10) nach Anspruch 7, wobei die biometrischen Hash-Daten von einem steganografischen digitalen Wasserzeichen getragen werden, das sich von dem ersten und zweiten digitalen Wasserzeichen unterscheidet.

9. Ausweisdokument (10) nach einem der vorhergehenden Ansprüche, wobei das Dokument mit einem ersten und zweiten verschiedenen maschinenlesbaren Merkmal versehen ist, die sich von dem ersten und zweiten Wasserzeichen unterscheiden, wobei das erste und zweite maschinenlesbare Merkmal aus der Gruppe ausgewählt werden, die aus Folgendem besteht: einem Balkencode (17), einem OCR-B-Text (16) und einem Magnetstreifen, wobei eines der Merkmale Daten trägt, die Daten, die von dem ersten Wasserzeichen getragen werden, in einer vorherbestimmten Weise entsprechen, und das andere Merkmal Daten trägt, die Daten, die von dem zweiten Wasserzeichen getragen werden, in einer vorherbestimmten Weise entsprechen.

10. Ausweisdokument (10) nach Anspruch 9, wobei das erste Merkmal Daten trägt, die Daten, die von dem ersten Wasserzeichen getragen werden, in einer vorherbestimmten Weise entsprechen, und das zweite Merkmal Daten trägt, die Daten, die von dem zweiten Wasserzeichen getragen werden, in einer vorherbestimmten Weise entsprechen.

11. Ausweisdokument (10) nach Anspruch 10, wobei das erste Merkmal OCR-B-Text umfasst.

12. Ausweisdokument (10) nach Anspruch 9 oder 10, wobei das zweite Merkmal einen Balkencode umfasst.

13. Ausweisdokument (10) nach einem der vorhergehenden Ansprüche, wobei das Dokument mindestens vier maschinenlesbare Merkmale umfasst:
das erste Wasserzeichen,
das zweite Wasserzeichen,
ein drittes Merkmal (16) und
ein viertes Merkmal (7),
und wobei die Daten, die einen ersten Parameter betreffen, eine Gruppe von drei der Merkmale logisch verknüpft und Daten, die einen zweiten Parameter betreffen, eine andere Gruppe von drei der Merkmale logisch verknüpft.

14. Ausweisdokument (10) nach Anspruch 13, wobei das dritte Merkmal OCR-B-Text umfasst.

15. Ausweisdokument (10) nach Anspruch 13 oder 14, wobei das vierte Merkmal einen Balkencode umfasst.

16. Ausweisdokument (10) nach einem der Ansprüche 13 bis 15 wobei:
Daten, die einen ersten Parameter betreffen, die beiden Wasserzeichen und entweder das dritte oder vierte Merkmal logisch verknüpfen; und
Daten, die den zweiten Parameter betreffen, das dritte Merkmal, das vierte Merkmal und eines der beiden Wasserzeichen logisch verknüpfen.

17. Ausweisdokument (10) nach Anspruch 16, wobei der erste Parameter ein Dokumentkennzeichen ist.

18. Ausweisdokument (10) nach Anspruch 17, wobei Daten, die das Dokumentkennzeichen betreffen, das dritte Merkmal, das vierte Merkmal und eines der Wasserzeichen logisch verknüpfen.

19. Ausweisdokument (10) nach Anspruch 16, wobei der zweite Parameter eine Chargennummer ist.

20. Ausweisdokument (10) nach Anspruch 19, wobei Daten, die die Chargennummer betreffen, die beiden Wasserzeichen und das dritte Merkmal logisch verknüpfen.

21. Ausweisdokument (10) nach einem der vorhergehenden Ansprüche, wobei das Dokument ein Reisepass ist.

22. Ausweisdokument (10) nach einem der Ansprüche 1 bis 20, wobei das Dokument ein Führerschein ist.

## Revendications

1. Document d'identité avec photographie (10), comprenant une photographie (12) et une zone imprimée (11),
un premier filigrane numérique codé de manière stéganographique dans la photographie (12),
le premier filigrane numérique incluant des premières informations qui peuvent être décodées par la suite et utilisées pour authentifier le document (10),
**caractérisé en ce que** le document comprend un deuxième filigrane numérique codé de manière stéganographique dans la zone imprimée (11) du document (10),
le deuxième filigrane numérique incluant des deuxièmes informations dont les contenus correspondent, de manière attendue, aux contenus desdites premières informations,
lesdites premières et deuxièmes informations pouvant être décodées et leur correspondance attendue vérifiée afin de confirmer que le document d'identité avec photographie (10) est authentique.

2. Document d'identité (10) selon la revendication 1, dans lequel les informations incluses dans le premier filigrane numérique comprennent un numéro de document, et ce même numéro de document est également inclus dans le deuxième filigrane numérique.

3. Document d'identité (10) selon la revendication 1 ou 2, dans lequel les informations incluses dans le premier filigrane numérique comprennent des données qui ne sont pas incluses dans le deuxième filigrane numérique.

4. Document d'identité (10) selon l'une quelconque des revendications 1 à 3, dans lequel le document (10) est doté d'une fonctionnalité lisible en machine (16) distincte desdits filigranes numériques, ladite fonctionnalité lisible en machine (16) incluant des données relatives à un identifiant de document, dans lequel les informations incluses dans l'un desdits filigranes comprennent des données correspondant, de manière prédéterminée, audit identifiant, ce qui permet de vérifier la correspondance attendue entre les données provenant de ladite fonctionnalité lisible en machine et celles provenant dudit filigrane, afin de faciliter la détection de toute modification frauduleuse du document (10).

5. Document d'identité (10) selon la revendication 4, dans lequel le premier filigrane inclut ledit identifiant et le deuxième filigrane inclut les données produites par le traitement dudit identifiant en fonction d'un algorithme.

6. Document d'identité (10) selon la revendication 5, dans lequel le deuxième filigrane inclut des données produites par le traitement dudit identifiant en fonction d'un algorithme cryptographique.

7. Document d'identité (10) selon l'une quelconque des revendications précédentes, dans lequel l'article inclut également un condensé de données biométriques correspondant à une personne représentée sur l'image photographique.

8. Document d'identité (10) selon la revendication 7, dans lequel le condensé de données biométriques est inclus dans un filigrane numérique stéganographique, distinct dudit premier et dudit deuxième filigranes numériques.

9. Document d'identité (10) selon l'une quelconque des revendications précédentes, dans lequel le document est doté de premières et de deuxièmes fonctionnalités lisibles en machine différentes, distinctes du premier et du deuxième filigranes, les premières et deuxièmes fonctionnalités lisibles en machine étant sélectionnées parmi le groupe composé d'un code à barres (17), d'un texte en ROC-B (16) et d'une bande magnétique, dans lequel l'une desdites fonctionnalités inclut des données correspondant, de manière prédéterminée, aux données incluses dans le premier filigrane, et l'autre desdites fonctionnalités inclut des données correspondant, de manière prédéterminée, aux données incluses dans le deuxième filigrane.

10. Document d'identité (10) selon la revendication 9, dans lequel la première fonctionnalité inclut des données correspondant, de manière prédéterminée, aux données incluses dans le premier filigrane, et la deuxième fonctionnalité inclut des données correspondant, de manière prédéterminée, aux données incluses dans le deuxième filigrane.

11. Document d'identité (10) selon la revendication 10, dans lequel la première fonctionnalité comprend du texte en ROC-B.

12. Document d'identité (10) selon la revendication 9 ou 10, dans lequel la deuxième fonctionnalité comprend un code à barres.

13. Document d'identité (10) selon l'une quelconque des revendications précédentes, dans lequel le document comprend au moins quatre fonctionnalités lisibles en machine :
le premier filigrane ;
le deuxième filigrane ;
une troisième fonctionnalité (16) ; et
une quatrième fonctionnalité (7) ;
et dans lequel des données relatives à un premier paramètre lient, de manière logique, un groupe composé de trois desdites fonctionnalités, et des données relatives à un deuxième paramètre lient, de manière logique, un groupe différent composé de trois desdites fonctionnalités.

14. Document d'identité (10) selon la revendication 13, dans lequel la troisième fonctionnalité comprend du texte en ROC-B.

15. Document d'identité (10) selon la revendication 13 ou 14, dans lequel la quatrième fonctionnalité comprend un code à barres.

16. Document d'identité (10) selon l'une quelconque des revendications 13 à 15, dans lequel :
des données relatives à un premier paramètre lient, de manière logique, les deux filigranes et une fonctionnalité parmi la troisième et la quatrième fonctionnalité ; et
des données relatives au deuxième paramètre lient, de manière logique, la troisième fonctionnalité, la quatrième fonctionnalité et l'un des deux filigranes.

17. Document d'identité (10) selon la revendication 16, dans lequel le premier paramètre est un identifiant de document.

18. Document d'identité (10) selon la revendication 17, dans lequel des données relatives à l'identifiant de document lient, de manière logique, la troisième fonctionnalité, la quatrième fonctionnalité et l'un des filigranes.

19. Document d'identité (10) selon la revendication 16, dans lequel le deuxième paramètre est un numéro de lot.

20. Document d'identité (10) selon la revendication 19, dans lequel des données relatives au numéro de lot lient, de manière logique, les deux filigranes et la troisième fonctionnalité.

21. Document d'identité (10) selon l'une quelconque des revendications précédentes, dans lequel le document est un passeport.

22. Document d'identité (10) selon l'une quelconque des revendications 1 à 20, dans lequel le document est un permis de conduire.
